# EUROPEAN PATENT SPECIFICATION

(11) **EP 1 777 048 B1**
(45) Date of publication and mention of the grant of the patent: **31.12.2008**
(21) Application number: 06021743.7
(22) Date of filing: 17.10.2006
(51) Int. Cl.: B27D 5/00, B27C 9/02, B23Q 1/54

(54) **Operating machine for machining wooden elements**
Bearbeitungsmaschine für Holzelemente
Machine à usiner des pièces en bois

(30) Priority: 18.10.2005 IT MO20050268
(43) Date of publication of application: 25.04.2007
(73) Proprietor: SCM Group S.p.A., 47900 Rimini (IT)
(72) Inventor: Neri, Alessandro, 47811 Viserba di Rimini (RN) (IT)
(74) Representative: Crugnola, Pietro

(56) References cited:
- EP-A2- 1 074 359
- DE-A1- 3 914 461
- FR-A- 2 813 032

## Description

The present invention refers to an operating machine for machining elements made of wood or similar materials, in particular a multifunction operating machine able to perform a plurality of machining operations on elements, such as, for example, panels, tables, profiled elements, etc.

Multifunction operating machines or machining centres are known that perform edge-banding, milling or drilling operations on wooden panels and substantially comprise an edge-banding unit for applying and gluing edges to panels being machined, and an operating unit for driving tools such as milling cutters, drills, blades, pads, etc. These machines enable the simultaneous machining of two elements or workpieces, with a significant increase in production speed.

The operating unit generally comprises a single operating head provided with a spindle, able to use a plurality of tools and of tool units or combined tool-holder heads, the latter housed in a suitable tool holder magazine. A tool holder magazine enables said tools to be replaced automatically and rapidly without having to retool the machine. Replacing the tools and tool units can in fact be achieved whilst the edge-banding unit is working.

Some operating heads may further comprise interface means suitable for providing pneumatic and/or electrical energy to a tool unit mounted on the spindle. Typically, this interface means comprises one or more conduits for the compressed air and one or more connections for the electrical energy supply that enable pneumatic or electric devices to be driven that are mounted on some units, for example pneumatic cylinders, tool-adjusting slides, nozzles for jets of cold or hot air, etc.

The operating heads used in such edge-banding and routing machining centres are of vertical type, as they have four controlled axes that enable rectilinear movements in the space according to a triad of orthogonal axes X, Y, Z and a rotation around a rotation axis C, the latter generally parallel to a vertical rectilinear movement axis Z.

A drawback of these operating machines consists in that they can perform only a limited number of machinings, typically machinings with a cutting direction lying on a plane, for example milling, drilling, edge-banding and edge trimming, etc.

Operating machines or milling machines are known that are provided with so-called anthropomorphic operating heads with five controlled axes that enable a spindle associated with them to perform a plurality of operations with complex cutting trajectories, for example along inclined planes or curved surfaces, for machining workpieces with three-dimensional shapes. The aforesaid operating heads, with respect to the heads with four controlled axes, comprise a second rotation axis B that is transverse to the directions defined by the triad of orthogonal axes X, Y, Z.

Such operating heads nevertheless have the drawback of not being able to use any type of tool units or combined heads, for example those used for finishing the panel edge, due to the dimensions of said units, which are incompatible with the operating modes of the heads. Said heads generally have minimal radial dimensions in order to be able to perform operations underneath the workpiece without colliding with the worktable. In addition, these operating heads lack interface means for the pneumatic and electrical supply of the aforesaid units.

FR 2813032 discloses a machining centre consisting of at least two spindles designed to receive the required tools, at least one tool magazine to realise the automatic tool changes and at least one locking table designed to hold at least two work pieces. A control unit is designed for arranging the machining programmes in such a way that the spindles are operated with minimum stoppages.

DE 3914461 discloses a machine for gluing a strip of edging material onto panels such as furniture elements. The machine has the press-on roller mounted on a tilting arm which is arranged on the support and capable of turning 360 degrees about the axis of the press-on roll or an axis parallel to it. An intermediate store is arranged in the tilting arm taking the edging material cut off to length. The edging material is fed from the store to the press-on roll, and the store is on or near the bulk store.

An object of the present invention is to improve known operating machines for machining elements made of wood or similar materials, in particular increasing the versatility and flexibility of use thereof.

Another object is to obtain an operating machine able to perform edge-banding operations and a plurality of machinings also on elements having a complex shape and three-dimensional forms.

A further object is to obtain an operating machine that is able to drive tool units or combined tool-holder heads provided with means or devices which are pneumatically and/or hydraulically and/or electrically driven, enabling said tool units or heads to perform complex trajectories and movements in the space.

According to the invention an operating machine is provided for machining elements made of wood or similar material as defined in claim 1.

Owing to the invention, it is thus possible to obtain a very versatile and flexible operating machine that is able to perform, in addition to edge-banding operations, a plurality of machinings also on elements having a complex shape and three-dimensional forms. The operating means of the machine in fact allows to move in the space tools, units, combined multifunction heads according to complex trajectories and paths, in order to perform the desired machinings.

The operating means may comprise interface means suitable for supplying tool means with pneumatic and/or hydraulic and/or electrical energy. In this way it is possible to drive tool units and heads provided with devices pneumatically and/or hydraulically and/or electrically driven, such as air jets, actuators, solenoid valves, electric resistances, etc.

The invention can be better understood and implemented with reference to the attached drawings, in which:
Figure 1A and 1B are respectively a schematic plan view and a perspective view of an operating machine for machining elements in wood or similar materials, provided with fixed portal means; this machine is not in accordance with the invention and is presented for illustrative purposes;
Figure 2 is a perspective view of operating means of the machine in Figure 1A, which are also used in the machine of the invention.
Figures 3A and 3B are respectively a schematic plan view and a perspective view of a version of the machine in Figure 1A;
Figures 4A and 4B are respectively a schematic plan view and a perspective view of an embodiment of the invention, which is a further version of the machine in Figure 1A;
Figures 5A and 5B are respectively a schematic plan view and a perspective view of another illustrative example of operating machine, provided with a movable portal;
Figures 6A and 6B are respectively a schematic plan view and a perspective view of an embodiment of the invention, which is a version of the machine in Figure 5A. With reference to figures 1A, 1B and 2, there is schematically shown an operating machine 1 for machining elements 100 made of wood or similar material comprising edge-banding means 2 and operating means 3, the latter being movable in space, with respect to each element 100 to be machined, along three controlled rectilinear axes substantially perpendicular to one another and around two controlled rotation axes.

The operating means 3 comprises an anthropomorphic operating head with controlled axes, provided with a spindle means 5 suitable for driving tool means 30 for performing a plurality of machinings on said elements 100.

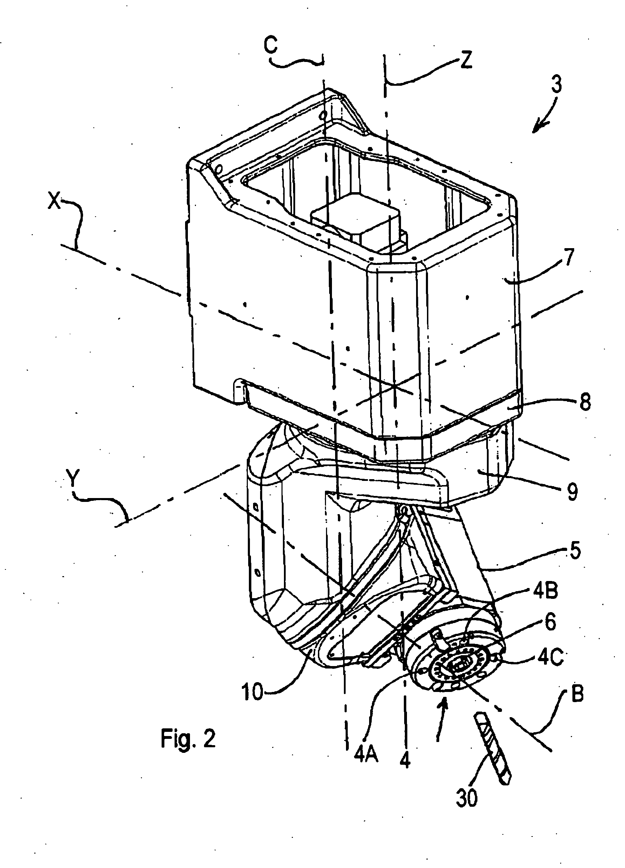

With particular reference to Figure 2, the three controlled rectilinear movement axes of the operating head 3 comprise a first rectilinear movement axis Z, substantially vertical, a second rectilinear movement axis X, almost perpendicular to said first rectilinear movement axis Z and a third rectilinear movement axis Y, substantially perpendicular to said first rectilinear movement axis Z and to said second rectilinear movement axis X. The three controlled rectilinear movement axes X, Y, Z form a triad of orthogonal axes, which define the directions of the relative rectilinear movements of the operating head 3 with respect to the element 100 and not with respect to the machine 1. It is in fact provided that the operating head 3 can have only two controlled rectilinear movement axes, for example the axes Z and X, the third axis, Y axis, being associated with the element 100.

The controlled rotating axes include a first rotation axis C, having a direction substantially defined by the first rectilinear movement axis Z, and a second rotation axis B, having a direction substantially transverse to the directions defined by the axes X, Y, Z. In particular, the rotation axes B, C are not parallel and can be skewed in relation to one another or be incident.

The operating head 3 comprises a box structure 7, fixed to a first part 8 that supports a first rotatable part 9, substantially in the shape of an upturned L, with which a second rotatable part 10 is associated. The first rotatable part 9 is arranged for rotating around the first rotation axis C, whilst the second rotatable part 10 is arranged for rotating around the second rotation axis B, with respect to the aforesaid first rotatable part 9. The spindle means 5 is removably coupled with the second rotatable part 10.

The box structure 7 is an element that is located immediately below slides that enable the spindle means 5 to move in a rectilinear manner in directions that are parallel to the first rectilinear movement axis Z, to the second rectilinear movement axis X or to the third rectilinear movement axis Y.

The first rotatable part 9 and the second rotatable part 10 enable the spindle means 5 to rotate respectively around the first rotation axis C and the second rotation axis B.

A suitable combination of the aforesaid five movements enables the spindle means 5, and thus the corresponding tool, to position itself for performing the plurality of desired machinings. In particular, the five axes X, Y, Z, C, B can be interpolated to obtain complex movements and trajectories.

The operating means 3 further comprises interface means 4, that is able to supply with pneumatic and/or hydraulic and/or electrical energy tool means 30 that are suitable for performing machinings on said elements 100.

The tool means 30 comprises single tools, such as routing cutters, blades, drills, etc, and tool units and combined multifunction heads, known type and not illustrated, which are capable of performing a plurality of machinings on said elements 100. For example, the operating means 3 can support and drive a combined edge-finishing head, having a dual function of trimmer and edge-scraping device and provided with movable abutting parts that are pneumatically drivable in order to fit to the different thicknesses of the elements 100 to be machined. The pneumatic supply provided by the interface means 4 can also be used to drive pneumatic cylinders, slides for adjusting a tool position, or to make high-pressure air jets for cleaning the workpieces and/or the tools during machining. Alternatively, the pneumatic energy is in the form of a pneumatic vacuum that is for example necessary for driving suction cups.

Likewise, the interface means 4 can provide pressurised fluid, for example water, oil, for operating hydraulic devices mounted on said head.

The power supply can for example be used to supply solenoid valves, electric motors, heating lamps, electric resistances located on the head.

The interface means 4 comprises a plurality of connections or joints, for example a first connection 4a, a second connection 4b, a third connection 4c that enable the removable connection of the tool means 30 to respective supply circuits of compressed air, vacuum, pressurised fluid, electrical energy of the machine 1.

The spindle means 5 is provided with a power takeoff or toolholder 6, for example a standard HSK63F toolholder, for a direct connection of the single tools and for driving other tool units. The connections 4a, 4b, 4c are placed around said toolholder 6.

The edge-banding means 2, of known type and not illustrated in details, comprises gluing means suitable for distributing adhesive on the edge portions of an element 100, for example a panel, for subsequent application by means of pressure rollers of an edge removed from a suitable edge holder magazine.

It should be noted that, owing to the configuration of the operating means 3, it is possible to obtain a very versatile and flexible operating machine that is able to perform both edge-banding operations and a plurality of different machinings, also on elements with a complex shape and with three-dimensional forms. In fact, it is possible to move in space the tools and the combined heads, according to complex trajectories and paths. In addition to that, the interface means 4, which can provide pneumatic and/or hydraulic and/or electrical energy, allows to use efficiently on the machine 1 tool units provided with means or devices pneumatically and/or hydraulically and/or electrically driven, thus enabling many different machinings to be performed.

The operating machine 1 is substantially a multifunction machining centre and comprises supporting means 20, 21 suitable for slidingly supporting the edge-banding means 2 and the operating means 3, and a worktable 11 fit for supporting the elements 100 to be machined.

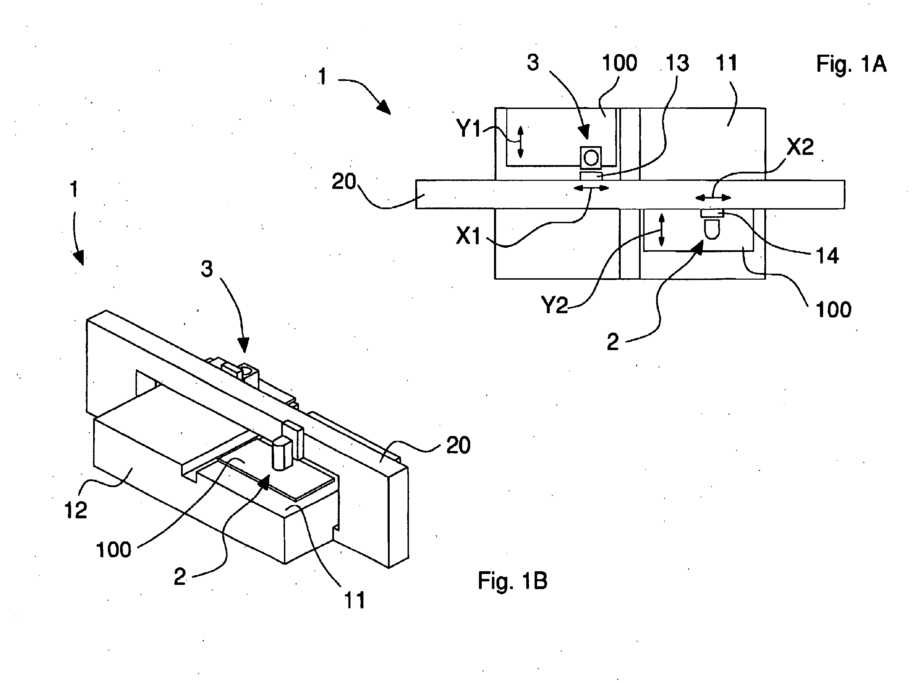

With reference to the machine shown in figures 1A, 1B, the supporting means 20, 21 comprises fixed portal means 20, rigidly connected to the base 12 of the machine 1 and having a longitudinal extension in the shape, for example, of a single-beam enbloc.

The operating means 3 is connected to said fixed portal means 20 by means of a first slide 13, which is movable along a first longitudinal direction X1, substantially defined by the direction of the second rectilinear movement axis X or of the third rectilinear movement axis Y of said operating means 3.

The edge-banding means 2 is connected to said fixed portal means 20 by means of a second slider 14, that is movable along a second longitudinal direction X2, which is substantially parallel to said first longitudinal direction X1.

The edge-banding means 2 and the operating means 3 are mounted on opposite sides of said fixed portal means 20, but they can also be mounted on the same side.

In this machine that is provided with fixed portal means, the movement of the operating means 3 in the transverse direction, defined by the direction of the third rectilinear movement axis Y or of the second rectilinear movement axis X, instead of being performed by the operating means 3, is performed by the elements 100 to be machined.

In particular, known and not shown rectilinear movement means is provided that enables two distinct elements 100 to be moved on the worktable 11 generally in an independent and simultaneous manner, respectively along a first transverse direction Y1 and a second transverse direction Y2. These transverse directions Y1, Y2 are substantially parallel each other and they are almost orthogonal to the longitudinal directions X1, X2 along which move respectively the edge-banding means 2 and the operating means 3.

It is evident that also in this case the relative moving of the operating means 3 with respect to the element 100 occurs always according to five controlled axes, as defined above.

The operating machine 1 further comprises magazine means, of known type and not illustrated, suitable for housing the tool means 30, and in particular the plurality of single tools and multifunction units that are necessary for performing machinings on the elements 100.

The machine comprises numerical management and control means, of known type and not shown, for driving the edge-banding means 2 and the operating means 3.

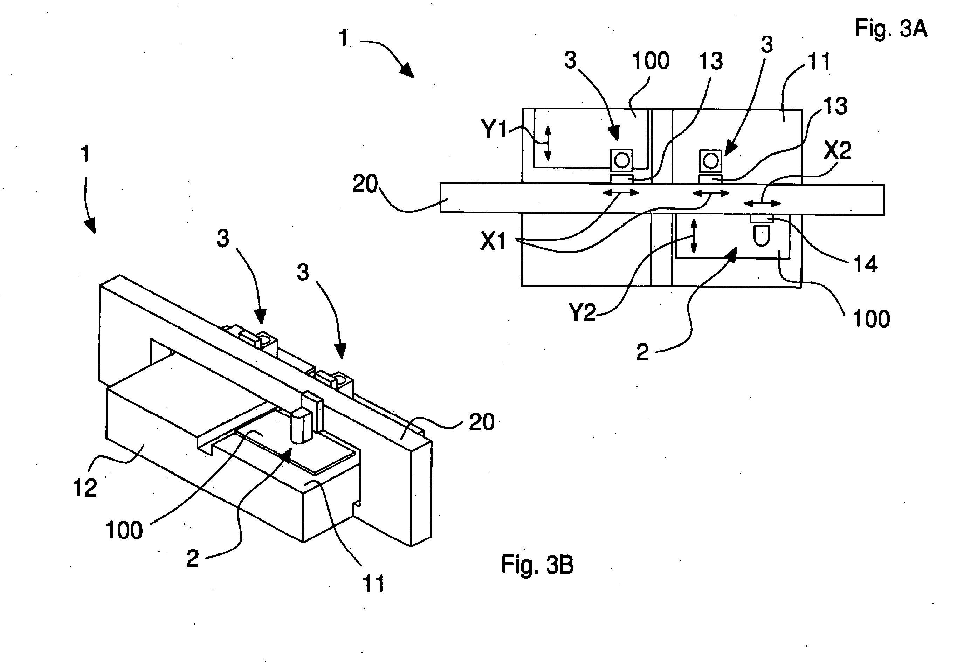

In the version of the operating machine 1 illustrated in Figures 3A and 3B, the operating means 3 comprises a pair of operating heads mounted on the same side of the fixed portal means 20, each of the heads being provided with a respective spindle means 5. In this version of the machine 1, the operating heads 3 are movable independently on the fixed portal means 20 along the same first longitudinal direction X1 of motion.

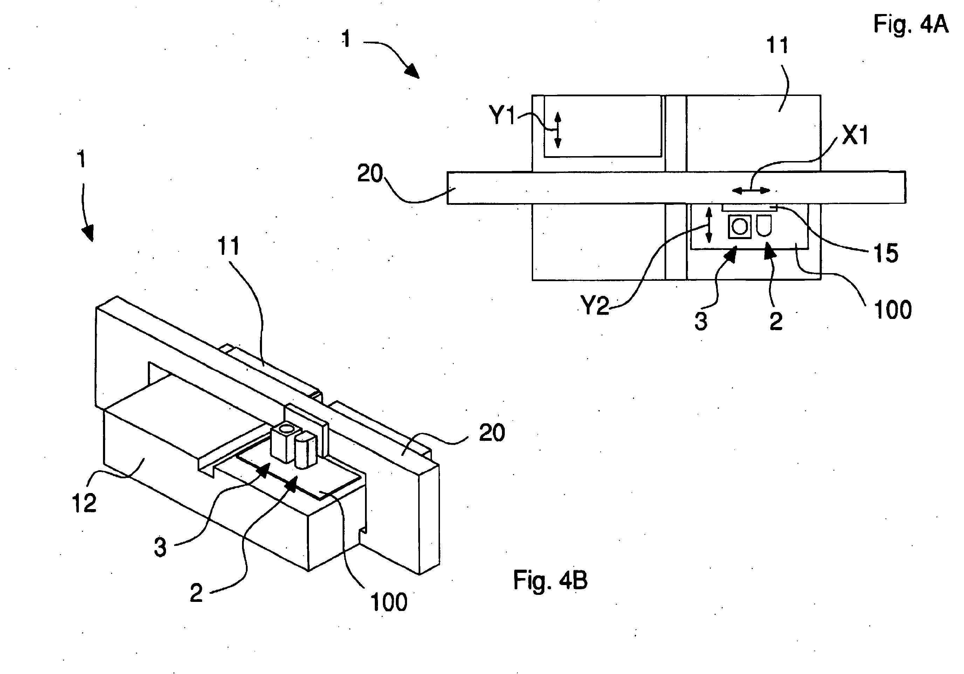

Figures 4A, 4B illustrate a version of the operating machine 1 in which the edge-banding means 2 and the operating means 3 are mounted on the same side of said fixed portal means 20 and are connected together and mutually fixed by means of interconnecting means 15 consisting, for example, of a common slide 15 that is slideable according to a first longitudinal direction X1. Alternatively, the operating means 3 and the edge-banding means 2 can be supported respectively by a first slider 13 and by a second slider 14 that are coupled together and moved by a single motor along the first longitudinal direction X1.

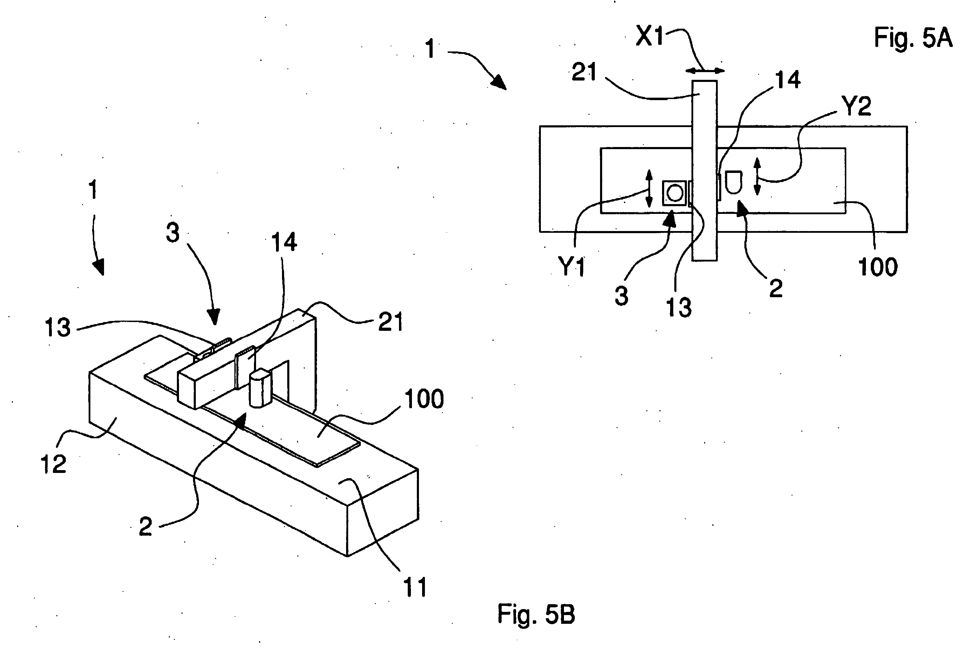

Figures 5A and 5B illustrate another operating machine 1 in which the supporting means 20, 21 comprises movable portal means 21, slideably connected to the base 12 of the machine 1 and arranged, for example, transversely to the machine, in the shape of a single-beam monobloc.

The movable portal means 21 is slidable along a first longitudinal direction X1, substantially defined by the direction of the second rectilinear movement axis X or of the third rectilinear movement axis Y of said operating means 3.

The operating means 3 is connected to the movable portal means 21 by means of a first slider 13, which is movable along a first transverse direction Y1, which is almost orthogonal to a said first longitudinal direction X1 and therefore substantially defined by the direction of the third rectilinear movement axis Y or of the second rectilinear movement axis X of said operating means 3.

In the same way, the edge-banding means 2 is connected to the movable portal means 21 by means of a second slider 14, movable along a second transverse direction Y2, which is almost parallel to said first transverse direction Y1.

In this machine structure, the element 100 to be machined is fixed to the worktable 11.

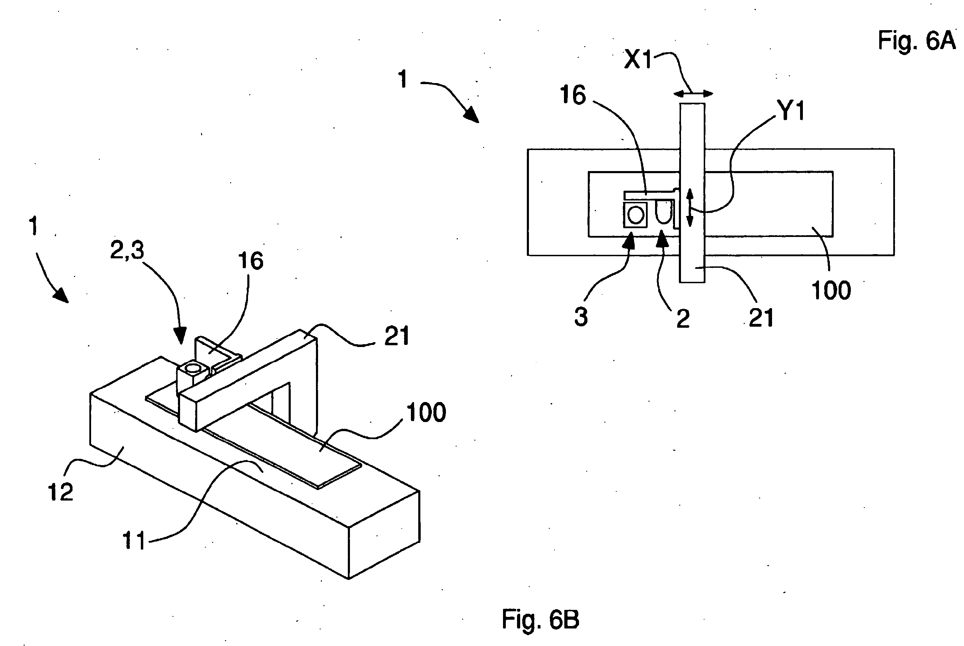

Figures 6A and 6B illustrate an embodiment of the invention which is a version of the operating machine 1 that differs from the one in Figure 5A in that the edge-banding means 2 and the operating means 3 are mounted on the same side of the movable portal means 21. In particular, the edge-banding means 2 and the operating means 3 are interconnected and integral, because they are fixed to interconnection means 16 comprising a common slide 16, that is movable according to the first transverse direction Y1.

Alternatively, the operating means 3 and the edge-banding means 2 can be supported respectively by a first slider 13 and by a second slider 14 that are coupled to one another and moved by a single motor along the first transverse direction Y1.

## Claims

1. Operating machine for machining elements (100) made of wood or similar material comprising:
- edge-banding means (2) provided with gluing means for distributing adhesive on edge portions of an element (100) made of wood or similar material;
- operating means (3) provided with an anthropomorphic operating head with controlled axes comprising a spindle means (5) suitable for driving tool means (30) for performing a plurality of machinings on said elements (100), said operating means (3) being movable with respect to said element (100) along three controlled rectilinear axes substantially perpendicular to one another and around two controlled rotation axes (B, C) not parallel to one another and substantially incident; and
- supporting means (20, 21) for slidingly supporting said edge-banding means (2) and said operating means (3), said supporting means (20, 21) comprising fixed portal means (20) and/or movable portal means (21),
whereby said edge-banding means (2) and said operating means (3) are mounted on the same side of said fixed portal means (20) or of said movable portal means (21) and said operating machine comprises interconnecting means (15, 16) suitable for connecting said edge-banding means (2) to said operating means (3).

2. Machine according to claim 1, wherein said edge-banding means (2) and said operating means (3) are made substantially integral by said interconnecting means (15, 16).

3. Machine according to claim 1, or 2, wherein said interconnecting means (15, 16) comprises a common slide (15) that is slideable along a first longitudinal direction (X1) or along a first transverse direction (Y1).

4. Machine according to claim 3, wherein said first transverse direction (Y1) is substantially orthogonal to said first longitudinal direction (X1).

5. Machine according to claim 3 or 4, wherein said movable portal means (21) is movable along said first longitudinal direction (X1).

6. Machine according to any preceding claim, comprising management and control means for numerical controlling at least said edge-banding means (2) and said operating means (3).

7. Machine according to any preceding claim, further comprising a worktable (11) suitable for supporting at least one element (100).

8. Machine according to claim 7, as claim 7 is appended to claim 3, comprising rectilinear movement means for moving at least two elements (100) on said worktable (11), respectively along said first transverse direction (Y1) and a second transverse direction (Y2).

9. Machine according to claim 8, wherein said first transverse direction (Y1) and said second transverse direction (Y2) are substantially parallel.

10. Machine according to any preceding claim, wherein said operating means (3) comprises interface means (4) suitable for supplying said tool means (30) with pneumatic and/or hydraulic and/or electrical energy.

11. Machine according to claim 10, wherein said interface means (4) comprises connections (4a, 4b, 4c) suitable for connecting said tool means (30) to pneumatic and/or hydraulic and/or electrical energy supplies.

12. Machine according to any of preceding claim, wherein said spindle means (5) comprises a fitting (6) for connecting and mechanically driving said tool means (30).

13. Machine according to any of preceding claim, wherein said spindle means (5) is an electronically controlled electric spindle.

14. Machine according to any of preceding claim, wherein said tool means (30) comprises at least one among routing, drilling, cutting tools, tool units, finishing heads for an edge of said element (100).

15. Machine according to any of preceding claim, comprising magazine means suitable for housing said tool means (30).

## Patentansprüche

1. Arbeitsmaschine zum Bearbeiten von Elementen (100), die aus Holz oder einem ähnlichen Material bestehen, mit:
- einem Kantenumleimermittel (2), das mit einem Klebemittel zum Verteilen von Klebemittel auf Kantenbereichen eines Elementes (100) versehen ist, das aus Holz oder einem ähnlichen Material besteht;
- einem Arbeitsmittel, das mit einem Gelenkarbeitskopf versehen ist, mit gesteuerten Achsen, umfassend ein Spindelmittel (5), das zum Antreiben eines Werkzeugmittels (30) geeignet ist, um eine Mehrzahl von Bearbeitungen auf den Elementen (100) auszuführen, wobei das Arbeitsmittel (3) in Bezug auf das Element (100) entlang drei kontrollierten geradlinigen Achsen bewegbar ist, die im Wesentlichen senkrecht aufeinander stehen, sowie um zwei kontrollierte Drehachsen (B, C), die nicht zueinander parallel sind und im Wesentlichen zueinander winklig und
- einem Aufnahmemittel (20, 21) zum gleitenden Aufnehmen des Kantenumleimermittels (2) und des Arbeitsmittels (3), wobei das Aufnahmemittel (20, 21) ein festes Portalmittel (20) und/oder ein bewegliches Portalmittel (21) umfasst,
wobei das Kantenumleimermittel (2) und das Arbeitsmittel (3) auf derselben Seite des festen Portalmittels (20) oder des beweglichen Portalmittels (21) angeordnet sind, und wobei die Arbeitsmaschine ein Verbindungsmittel (15, 16) aufweist, das zum Verbinden des Kantenumleimermittels (2) mit dem Arbeitsmittel (3) geeignet ist.

2. Maschine nach Anspruch 1, bei der das Kantenumleimermittel (2) und das Arbeitsmittel (3) durch das Verbindungsmittel (15, 16) im Wesentlichen durchgehend ausgebildet wird.

3. Maschine nach Anspruch 1 oder 2, bei der das Verbindungsmittel (15, 16) einen gemeinsamen Schlitten (15) aufweist, der entlang einer ersten Längsrichtung (X1) oder entlang einer ersten Querrichtung (Y1) verschiebbar ist.

4. Maschine nach Anspruch 3, bei der die erste Querrichtung (Y1) im Wesentlichen senkrecht zu der ersten Längsrichtung (X1) ist.

5. Maschine nach Anspruch 3 oder 4, bei der das bewegliche Portalmittel (21) entlang der ersten Längsrichtung (X1) bewegbar ist.

6. Maschine nach irgendeinem vorhergehenden Anspruch, die ein Steuer- und Kontrollmittel zur numerischen Steuerung wenigstens des Kantenumleimermittels (2) und des Arbeitsmittels (3) aufweist.

7. Maschine nach irgendeinem vorhergehenden Anspruch, die ferner einen Arbeitstisch (11) aufweist, der zur Aufnahme des wenigstens einen Elementes (100) geeignet ist.

8. Maschine nach Anspruch 7, soweit Anspruch 7 von Anspruch 3 abhängig ist, die ein geradliniges Bewegungsmittel zum Bewegen von wenigstens zwei Elementen (100) auf dem Arbeitstisch (11) jeweils entlang der ersten Querrichtung (Y1) und einer zweiten Querrichtung (Y2) aufweist.

9. Maschine nach Anspruch 8, bei der die erste Querrichtung (Y1) und die zweite Querrichtung (Y2) im Wesentlichen parallel zueinander sind.

10. Maschine nach irgendeinem vorhergehenden Anspruch, bei der das Arbeitsmittel (3) ein Interfacemittel (4) aufweist, das zur Versorgung des Werkzeugmittels (30) mit pneumatischer und/oder hydraulischer und/oder elektrischer Energie geeignet ist.

11. Maschine nach Anspruch 10, bei der das Arbeitsmittel (4) Verbindungen (4a, 4b, 4c) aufweist, die zum Verbinden des Werkzeugmittels (30) mit einer pneumatischen und/oder hydraulischen und/oder elektrischen Energieversorgung geeignet ist.

12. Maschine nach irgendeinem vorhergehenden Anspruch, bei der das Spindelmittel (5) einen Fitting (6) zum Verbinden und mechanischen Antreiben des Werkzeugmittels (30) aufweist.

13. Maschine nach irgendeinem vorhergehenden Anspruch, bei der das Spindelmittel (5) eine elektronisch gesteuerte elektrische Spindel ist.

14. Maschine nach irgendeinem vorhergehenden Anspruch, bei der das Werkzeugmittel (30) wenigstens eines von einem Hobelwerkzeug, einem Bohrwerkzeug, einem Schneidwerkzeug, einer Werkzeugeinheit, einem Endbearbeitungskopf für eine Kante des Elements (100) aufweist.

15. Maschine nach irgendeinem vorhergehenden Anspruch, umfassend ein Magazinmittel, das zum Aufnehmen des genannten Werkzeugmittels (30) geeignet ist.

## Revendications

1. Machine destinée à l'usinage d'éléments (100) en bois ou matériau similaire, comprenant :
- des moyens (2) de placage de chant munis de moyens d'encollage destinés à répartir de l'adhésif sur les portions de chant d'un élément (100) en bois ou matériau similaire ;
- des moyens de fonctionnement (3) munis d'une tête d'actionnement anthropomorphique avec des axes contrôlés comprenant un moyen de broche (5) apte à entraîner des moyens d'outil(s) (30) pour réaliser une pluralité d'usinages sur lesdits éléments (100), lesdits moyens de fonctionnement (3) étant mobiles par rapport audit élément (100) le long de trois axes rectilignes contrôlés sensiblement perpendiculaires entre eux et autour de deux axes de rotation contrôlés (B, C) non parallèles entre eux et sensiblement incidents ; et
- des moyens de support (20, 21) pour supporter de manière coulissante lesdits moyens (2) de placage de chant et lesdits moyens de fonctionnement (3), lesdits moyens de support (20, 21) comprenant des moyens de portique fixes (20) et/ou des moyens de portique mobiles (21),
dans laquelle lesdits moyens (2) de placage de chant et lesdits moyens de fonctionnement (3) sont montés sur la même face desdits moyens de portique fixes (20) ou desdits moyens de portique mobiles (21) et ladite machine comprend des moyens d'interconnexion (15, 16) aptes à relier lesdits moyens (2) de placage de chant auxdits moyens de fonctionnement (3).

2. Machine selon la revendication 1, dans laquelle lesdits moyens (2) de placage de chant et lesdits moyens de fonctionnement (3) sont rendus essentiellement solidaires par lesdits moyens d'interconnexion (15, 16).

3. Machine selon la revendication 1 ou 2, dans laquelle lesdits moyens d'interconnexion (15, 16) comprennent un coulisseau commun (15) qui peut coulisser le long d'une première direction longitudinale (X1) ou le long d'une première direction transversale (Y1).

4. Machine selon la revendication 3, dans laquelle ladite première direction transversale (Y1) est sensiblement orthogonale à ladite première direction longitudinale (X1).

5. Machine selon la revendication 3 ou 4, dans laquelle lesdits moyens de portique mobiles (21) sont mobiles le long de ladite première direction longitudinale (X1).

6. Machine selon l'une quelconque des revendications précédentes, comprenant des moyens de gestion et de commande pour la commande numérique d'au moins lesdits moyens (2) de placage de chant et lesdits moyens de fonctionnement (3).

7. Machine selon l'une quelconque des revendications précédentes, comprenant de plus un plateau (11) porte-pièce apte à supporter au moins un élément (100).

8. Machine selon la revendication 7, lorsque la revendication 7 est dépendante de la revendication 3, comprenant des moyens de déplacement linéaire pour déplacer au moins deux éléments (100) sur ledit plateau (11) porte-pièce le long respectivement de ladite première direction transversale (Y1) et d'une deuxième direction transversale (Y2).

9. Machine selon la revendication 8, dans laquelle ladite première direction transversale (Y1) et ladite deuxième direction transversale (Y2) sont sensiblement parallèles.

10. Machine selon l'une quelconque des revendications précédentes, dans laquelle lesdits moyens de fonctionnement (3) comprennent des moyens d'interface (4) aptes à alimenter lesdits moyens d'outil(s) (30) en énergie pneumatique et/ou hydraulique et/ou électrique.

11. Machine selon la revendication 10, dans laquelle lesdits moyens d'interface (4) comprennent des connexions (4a, 4b, 4c) aptes à coupler lesdits moyens d'outil(s) (30) avec des alimentations en énergie pneumatique et/ou hydraulique et/ou électrique.

12. Machine selon l'une quelconque des revendications précédentes, dans laquelle ledit moyen de broche (5) comprend un raccord (6) pour coupler et entraîner mécaniquement lesdits moyens d'outil(s) (30).

13. Machine selon l'une quelconque des revendications précédentes, dans laquelle ledit moyen de broche (5) est une broche électrique à commande électronique.

14. Machine selon l'une quelconque des revendications précédentes, dans laquelle lesdits moyens d'outil(s) (30) comprennent au moins l'un parmi des outils de détourage, de perçage, de coupe, des unités d'outils, des têtes de finissage pour un chant dudit élément (100).

15. Machine selon l'une quelconque des revendications précédentes, comprenant des moyens de magasin aptes à contenir lesdits moyens d'outil(s) (30).
